Europäisches Patentamt

(19) European Patent Office

Office européen des brevets

(11) Publication number: **0 107 326**

**B1**

(12) EUROPEAN PATENT SPECIFICATION

(45) Date of publication of patent specification: **02.12.87**

(51) Int. Cl.⁴: **B 60 P 1/48**

(21) Application number: **83305419.0**

(22) Date of filing: **15.09.83**

(54) Method for loading an exchange platform, loading equipment, and exchange platform.

(30) Priority: **27.09.82 FI 823317**
**30.05.83 FI 831937**

(43) Date of publication of application:
**02.05.84 Bulletin 84/18**

(45) Publication of the grant of the patent:
**02.12.87 Bulletin 87/49**

(84) Designated Contracting States:
**AT BE CH DE FR GB IT LI LU NL SE**

(56) References cited:
**FI-B- 50 081**
**FI-B- 63 350**
**GB-A-2 064 470**
**GB-A-2 085 845**

(73) Proprietor: **MULTILIFT LTD**
**Ainsdale Drive Harlescott Industrial Estate**
**Shrewsbury Salop SY1 3TJ (GB)**

(72) Inventor: **Raisio, Reijo**
**Eskonkatu 11 A 20**
**SF-20340 Turku 34 (FI)**
Inventor: **Sutela, Leo**
**Vaha-Hameenkatu 9 C 73**
**SF-20500 Turku 50 (FI)**

(74) Representative: **Topps, Ronald et al**
**D. YOUNG & CO 10 Staple Inn**
**London WC1V 7RD (GB)**

Courier Press, Leamington Spa, England.

## Description

The present invention relates to a method for loading an exchange platform onto a vehicle and for its removal from same, and to apparatus for the same purpose.

The exchange platform loading and unloading equipment known in prior art can be divided into three types: wire exchange platform equipment, endless chain (conveyor-type) exchange platform equipment (Finnish Patent No. 50,081), and hook exchange platform equipment (Finnish published patent application No. 63,350).

It is typical of the wire exchange platform equipment that the driver must get out of the cab of the vehicle in order to attach the pulling wires of the equipment to the platform to be handled. As compared with the wire equipment, the chain exchange platform equipment can be considered automatic in the respect that the driver does not have to get out of the cab of the vehicle during the operation of the equipment. In a corresponding way, the hook exchange platform equipment can also be controlled without leaving the cab.

The lifting point of the wire and chain exchange platform equipment at the exchange platform is substantially at the level of the top surface of the platform. The lifting point at the platform of the hook exchange platform equipment is placed about 1.5 metres upwards from the top surface of the platform.

An advantage of the hook exchange platform equipment (one example being shown in British Patent No. 2 064 470) as compared with wire and chain equipment is the rigidity of the construction and, resulting from that, the ease of manipulation of the platform. The wire and chain exchange platform equipments have flexible members (wires and lifting chain), which are capable of transferring traction loads only. The hook devices can be considered as "positively driven".

The platform construction required by the wire and chain equipment is of lower weight, less expensive, simpler, and more versatile in situations of operation, as compared with the platform constructions of prior art hook exchange platform equipment. This is because the location of the platform grasping member of the hook exchange platform equipment about 1.5 m above the platform bottom necessitates a heavy and relatively expensive construction at the front end of the platform.

In practice, the platform can be handled from one end only, because the rear end of the platform must normally be "open" during loading and unloading.

In the case of the platforms of wire and chain equipment, the grasping members for pulling-on can be placed at both ends of the platform, which gives more varied possibilities of operation.

By removing the side and end boards of the platforms, the chain and wire equipment platforms may be stacked as empty for storage or for transportation. Moreover, it is easy to load the platforms from all of the four sides.

By means of the present invention, an attempt has been made to combine the advantages of all of the known types of exchange platforms:
— automation of the equipment
— controllability/rigidity of the equipment
— position of the grasping member
— improved handling properties
— possibility of stacking/storage
— cost/weight.

British Patent Application No. 2 085 845 (Hiab-Foco) published May 1982 discloses a load changer for a vehicle (5) which comprises an angular handling arm (1) which, when in normal loading position, comprises a horizontal part (2) and a vertical part (3). The horizontal part (2) is rotatably mounted on a transverse shaft (4) on the vehicle (5) and the vertical part (3) is provided with means (6) for hooking on to a corresponding hooking attachment of a load container. The load changer is designed also to facilitate handling of other types of load containers (8'), with the aid of wires (13), chains, cables or the like, and for this purpose includes a support arm (14) which at one end thereof is pivoted at or near the upper end of the part (3) and can swing between a position against the part (3) and an outward position where it constitutes an extension of the part (3). The support arm (14) is furnished at its outer end with a guide for a wire loop (13) and has corresponding guides at its pivot pins. The support arm (14) is rotatable backwards in a direction towards the load container, (8') and at the front side of the vertical part (3) the handling arm is fitted with a hooking means, preferably in the form of hydraulic cylinders (26; 27), for hooking the wire loop (13). The support arm (14) can be swung with the aid of one or more hydraulic cylinders (15). In this passage, the numbers in brackets refer to those used in the drawings of the Hiab-Foco application.

In accordance with the present invention, there is provided a method of loading an exchange platform located on the ground onto a vehicle over the rear thereof by operating a lifting mechanism on the vehicle, the lifting mechanism including a hook and a pivotable L-shaped frame, the frame having an extension pivoted thereto which is substantially vertical in the pick-up position of the frame, the extension being provided with the hook, the mechanism further including a piston-cylinder device (herein called for brevity a ram) pivotally connected to swing the L-shaped frame relative to the vehicle chassis; the method including locating the hook substantially at ground level, backing the vehicle towards the platform so that the hook is located within an arch defined by the grasping member of the platform and causing the hook to be located, in the transport position of the platform, adjacent to the junction of the limbs of the L-shaped frame, characterised by (a) providing a safety lock associated with the hook, and (b) lifting the hook relative to the platform by pivoting the L-shaped frame so that the hook becomes centred within the arch and engagement of the grasping member with the safety lock forces open the lock and energises a signal means in the driver's cab, said pivoting being effected by extending a further ram connected between the vehicle chassis and a pivotal auxiliary frame, the auxiliary frame being pivotally connected to the vehicle chassis and at a point remote from the rear end thereof and to the L-shaped frame, then continuing the lifting motion so that the safety lock is closed automatically by the force of a spring therein and the L-shaped frame continues to pivot to move the platform to a transport position on the vehicle without any sliding movement between parts of the L-shaped frame.

In an advantageous embodiment of the invention, the second frame has the extension pivotably connected to it *via* an intervening part, there being respective rams connected between the second portion and the intervening part and between the intervening part and the extension, the method including contracting the rams during the lifting operation in order that the platform should not be inclined excessively.

The paths of movement of the loading equipment as particularly disclosed herein are relatively low. Thereby operation is also possible in covered spaces. Of course, it is possible to provide the loading equipment with an additional possibility of horizontal shifting, whereby the pushing of the exchange platform onto a loading platform becomes easier.

When empty, even large numbers of exchange platforms in accordance with the invention may be stacked one above the other for storage and transportation. When the platform has no end structure, its useful length is increased.

The invention will be better understood from the following non-limiting description and from the attached drawings, wherein:

Figures 1—3 are schematical side views of an embodiment of the loading equipment fitted to the vehicle in different loading positions,

Figure 4 is a side view of a vehicle provided with loading equipment in accordance with Figures 1 to 3, the loading equipment being in the transport position,

Figure 5 shows the vehicle of Figures 1 to 4 with the loading equipment in the dumping position,

Figures 6—8 are more detailed side views of the loading equipment of Figures 1 to 5 in different loading positions,

Figure 9 is a side view of an exchange platform in accordance with the invention,

Figure 10 is a top view of the same platform,

Figure 11 is a view on an enlarged scale of the grasping member of the exchange platform as viewed from the side, and

Figure 12 is a front view of the grasping member.

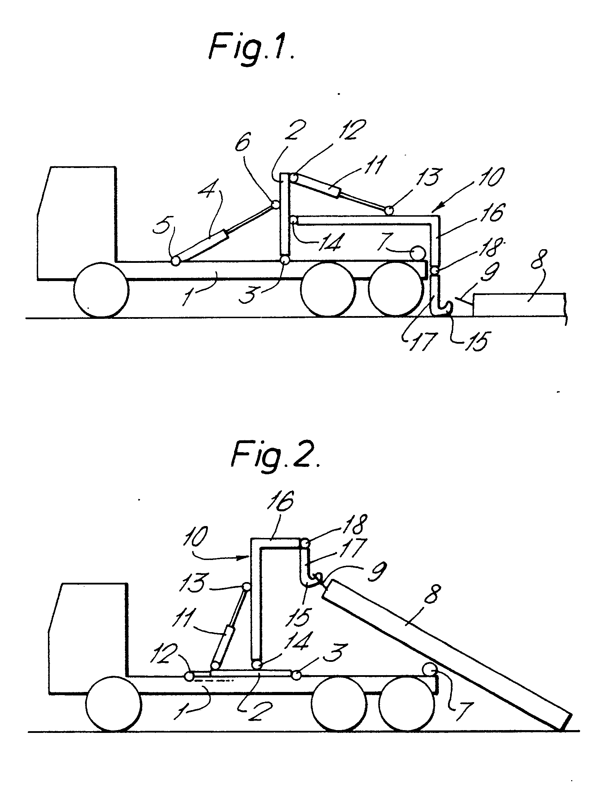

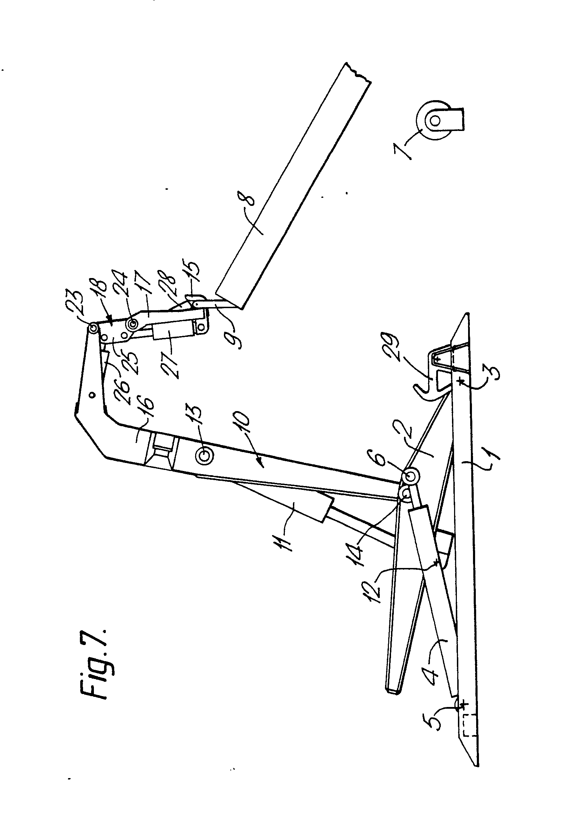

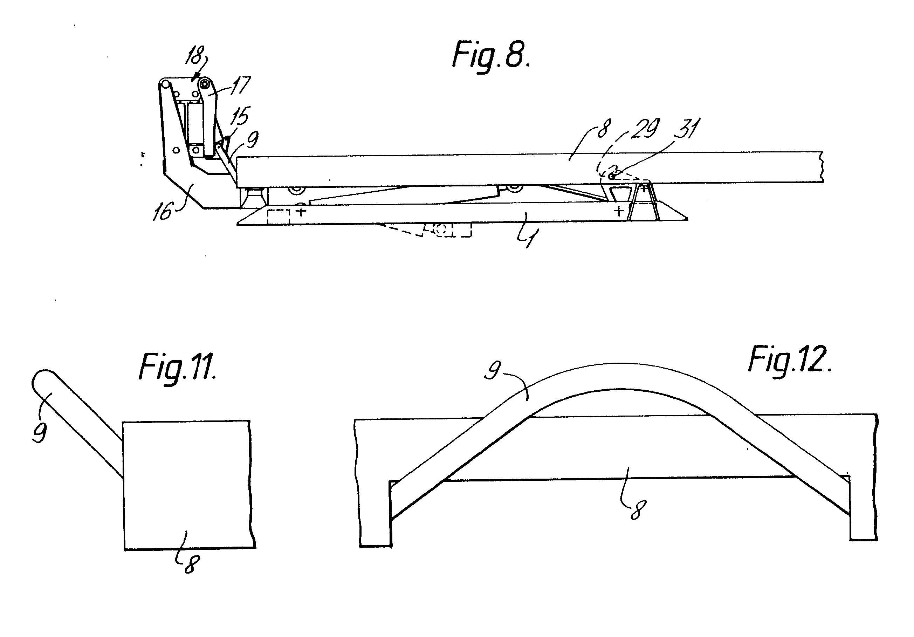

Referring firstly to Figures 1 to 8, the illustrated loading equipment comprises an auxiliary frame 2 pivotably mounted onto the chassis beams 1 of the truck or truck trailer by means of a transverse horizontal shaft or articulated joints 3 fitted to the chassis beams at a distance forwards from the support rolls 7 fitted at the rear ends of the chassis beams 1. To the auxiliary frame 2, a loading frame 10 is attached by one end pivotably by means of a transverse horizontal shaft or articulated joints 14, the free end of the said loading frame being provided with a grasping means 15. The loading frame 10 consists of a middle portion 16 of angular shape and of an extension part 17, which are connected to each other by means of an articulated joint. For the purpose of pivoting the auxiliary frame 2 in relation to the chassis beams 1 around a horizontal shaft or articulated joints 3, a main cylinder-piston device 4 or two parallel main cylinder-piston devices are provided so as to be fixed at one end, by means of an articulated joint 5, to the vehicle chassis 1 and at the other end, by means of an articulated joint 6, to the auxiliary frame 2.

For the purpose of pivoting the loading frame 10 independently in relation to the auxiliary frame 2, a cylinder-piston device 11 is fitted between them, being at one end fixed by means of an articulated joint 12 to the free end of the auxiliary frame 2 and, at the other end, by means of an articulated joint 13 to the middle portion 16 of the loading frame 10. In such a case, the articulated joint 14 between the loading frame 10 and the auxiliary frame 2 is located between the articulated joint 3 between auxiliary frame 2 and chassis beams 1 and the articulated joint 12 between auxiliary frame 2 and cylinder-piston device 11, for example, substantially equally far from both of them. In any case, the articulated joint 14 must be placed at a sufficient distance from the articulated joint 3 and the articulated joint 12.

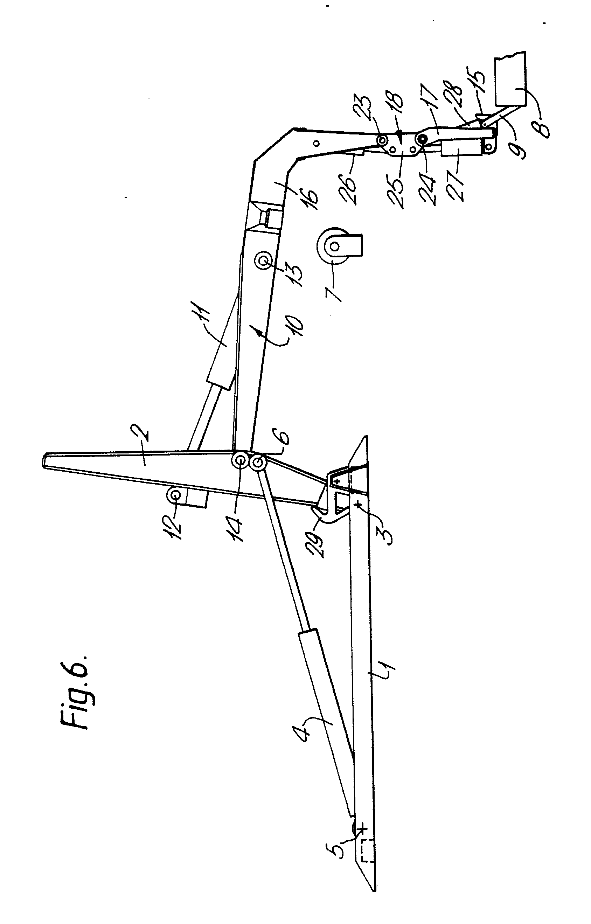

Thus, the horizontal part of the middle portion 16 of the loading frame 10 is attached to the auxiliary frame 2, and the extension part 17 is attached by means of an articulated joint to the upper end of the vertical part of the middle portion 16 (as viewed in the transport position). The articulated joint 18 between the middle portion 16 and the extension part 17 is shown in more detail in Figures 6 to 8. In accordance with them, one end of the connecting part 25 is, by means of an articulated joint 23, connected to the end of the middle portion 16 and the other end, by means of an articulated joint 24, to the end of the extension part 17. Between the middle portion 16 and the connecting part 25, a cylinder-piston device 26 is fitted by means of articulated joints. Also, a cylinder-piston device 27 is fitted between the connecting part 25 and the extension part 17 by means of articulated joints. The hook is provided with a safety lock 28, which is normally kept in the extended position by means of a spring and which can be opened, e.g. by means of a pressure cylinder.

Moreover, the equipment is provided with locking hooks 29 for locking the platform in position for transportation.

The loading equipment in accordance with Figures 1 to 8 operates as follows. When the loading equipment is brought to the position shown in Figures 1 and 6, the grasping means 15 provided at the end of the extension part 17 is located near the ground surface. In this position, the vehicle is backed towards the exchange platform or container until the hook arm and the safety lock 28 reach contact with the grasping member 9 of the platform 8. The safety lock is pressed in (i.e. forced open), whereupon a signal light is switched on in the driver's cab. When the hook is lifted, the safety lock is closed automatically by the force of the spring. The grasping member 9 of the platform is arch-shaped, so that in use the platform becomes centered at the initial stage of the lifting.

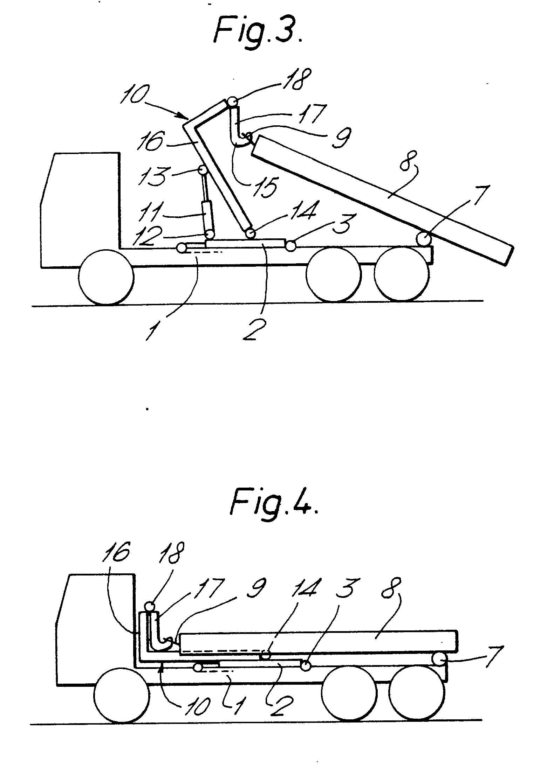

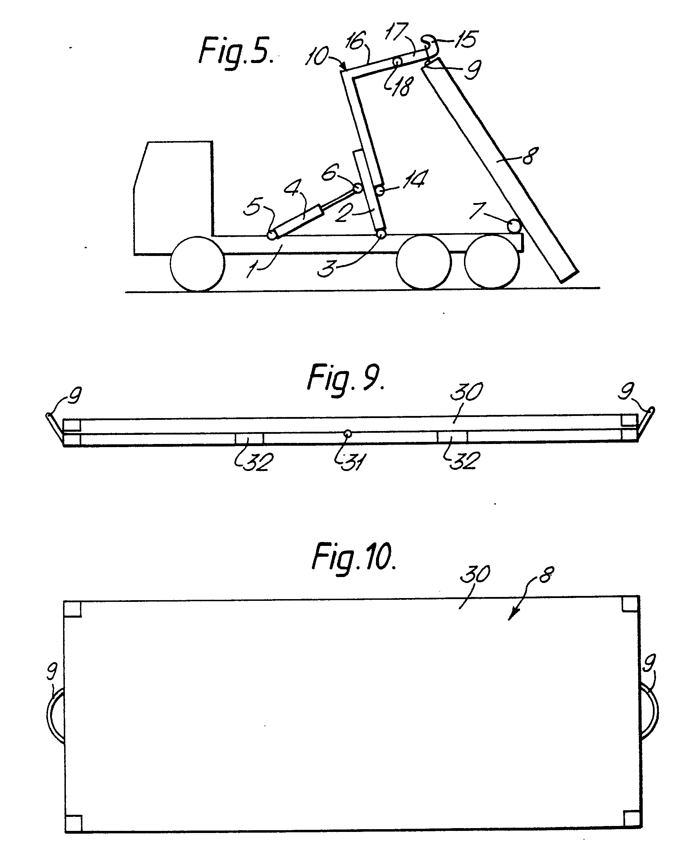

The grasping member 9 of the exchange platform 8 is placed in the middle at the lower edge of the end of the platform. Grasping members 9 are preferably provided at both ends of the platform 8, so that it is, possible to pull the exchange platform 8 onto the vehicle by any one of its ends. When the auxiliary frame 2 is being pulled by the main cylinder-piston device 4, the auxiliary frame 2 pivots around the articulated joints 3 towards the position in which the auxiliary frame 2 is placed on the chassis beams 1 in the horizontal position as pivoted forwards. Along with the auxiliary frame 2, the middle portion 16 of the loading frame 10 pivots, and the middle portion 16 pulls the exchange platform 8 up by means of the extension part 17. During the lifting movement, the extension part 17 pivots or it is pivoted in the direction shown in Figures 2 and 3 in order that the exchange platform 8 should not be inclined excessively. From the position of Figure 2 forwards, the loading frame 10 is pulled by means of the cylinder-piston device 11, whereat the middle portion 16 of the loading frame pivots forwards around the articulated joint 14 towards the transport position. The transport position comes out from Figure 4. Therein the extension part 17 of the loading equipment has been pivoted by means of the cylinder-piston devices 26 and 27 to alongside the vertical part of the middle portion 16, whereat the grasping means 15 of the extension part 17 is placed closed to the angle point of the middle portion 16. The removal of the exchange platform 8 from the vehicle takes place in the opposite order, as compared with the above. When the exchange platform 8 is to be dumped, the dumping is performed by using the main cylinder-piston device 4 as well as the cylinder-piston devices 26 and 27 between the middle portion 16 and the extension part 17, whereat the loading equipment can be brought to the dumping position shown in Figure 5.

By means of the loading equipment, it is also possible to load such exchange platforms at which the grasping member is placed in the upper part of the middle of the front end of the exchange platform. The only prerequisite for this is that the sum of the lengths of the extension part 17 and of the vertical part of the middle portion 16 corresponds to the distance of the grasping member of the exchange platform from the vehicle chassis. In such a case, during loading and transportation, the extension part 17 is then all the time kept in the outwardly pivoted position by means of the cylinder-piston devices 26 and 27.

Below, the construction of the exchange platform 8 in accordance with the invention will be described in more detail with reference to Figures 9 to 12.

The platform has a bottom plane 30, and it has no side or end boards. The grasping members 9 are attached at both ends of the platform in the middle. The grasping member 9 may be made pivotable or detachable, whereat the platform has no projecting parts that might hamper, e.g., sea or rail transportation. The grasping arch may also be made of a wire, whereat it can be turned out of the way if necessary. The middle portion of the grasping member is curved, and it is dimensioned so that its width is at least $1\frac{1}{2}$ times, preferably at least twice as large as the distance of its peak from the end of the platform.

At the sides of the frame beams of the platform, there are transverse locking pins 31, which are during transportation locked in the locking hooks 29 of the loading equipment. Moreover, there are two pockets 32 at both sides of the platform, into which the forks of a fork lift truck can be pushed, whereat the platforms can be stacked and shifted easily by means of a fork lift truck.

**Claims**

1. A method of loading an exchange platform (8) located on the ground onto a vehicle over the rear thereof by operating a lifting mechanism on the vehicle, the lifting mechanism including a hook (15) and a pivotable L-shaped frame (16), the frame (16) having an extension (17) pivoted thereto which is substantially vertical in the pick-up position of the frame (16), the extension (17) being provided with the hook (15), the mechanism further including a piston-cylinder device (herein called for brevity a ram) pivotally connected to swing the L-shaped frame (16) relative to the vehicle chassis (1); the method including locating the hook (15) substantially at ground level, backing the vehicle towards the platform so that the hook (15) is located within an arch defined by the grasping member (9) of the platform and causing the hook to be located, in the transport position of the platform, adjacent to the junction of the limbs of the L-shaped frame (16), characterised by (a) providing a safety lock (28) associated with the hook (15), and (b) lifting the hook (15) relative to the platform (8) by pivoting the L-shaped frame (16) so that the hook becomes centred within the arch and engagement of the grasping member (9) with the safety lock (28) forces open the lock (28) and energises a signal means in the driver's cab, said pivoting being effected by extending a further ram (4) connected between the vehicle chassis (1) and a pivotal auxiliary frame (2), the auxiliary frame (2) being pivotally connected to the vehicle chassis (1) at a point remote from the rear end thereof and to the L-shaped frame (16), then continuing the lifting motion so that the safety lock (28) is closed automatically by the force of a spring therein and the L-shaped frame (16) continues to pivot to move the platform (8) to a transport position on the vehicle without any sliding movement between parts of the L-shaped frame.

2. A method according to claim 1 in which the L-shaped frame has the extension (17) pivotably connected to it *via* an intervening part (18), there being respective rams (26, 27) connected between the second portion (22) and the intervening part (18) and between the intervening part (18) and the extension (17), the method including contracting the rams (26, 27) during the lifting operation in order that the platform (8) should not be inclined excessively.

### Patentansprüche

1. Ladeverfahren für eine Wechselplattform (8), welche auf den Boden liegt, auf ein Fahrzeug über dessen hintere Kante durch Betätigung eines Hebemechanismus auf dem Fahrzeug, wobei der Hebemechanismus einen Haken (15) und einen schwenkbaren L-förmigen Rahmen (16) aufweist, wobei der Rahmen (16) einen schwenkbar daran angebrachten Fortsatz (17) hat, welcher in der Aufnahmeposition des Rahmens (16) im wesentlichen vertikal ist, wobei der Fortsatz (17) mit dem Haken (15) versehen ist, der Mechanismus weiterhin eine Kolben-Zylindervorrichtung (hier der Kürze wegen als Kolben bezeichnet) aufweist, welcher schwenkbar angeschlossen ist, um den L-förmigen Rahmen (16) relativ zu dem Fahrgestell (1) zu schwenken; wobei das Verfahren einschließt das Anordnen des Hakens (15) im wesentlichen auf Bodenniveau, das Abstützen des Fahrzeuges in Richtung auf die Plattform, so daß der Haken (15) innerhalb eines Bogens angeordnet ist, welcher durch das Greifteil (9) der Plattform definiert ist, und bewirkt, daß der Haken in der Transportstellung der Plattform benachbart zu der Verbindung der Glieder des L-förmigen Rahmens (16) angeordnet ist, gekennzeichnet durch (a) Vorsehen eines Sicherheitsriegels (28), welcher dem Haken (15) zugeordnet ist und (b) Anheben des Hakens (15) relativ zur Plattform (8) durch Schwenken des L-förmigen Rahmens (16), so daß der Haken in dem Bogen zentriert wird und der Eingriff des Griefteiles (9) mit dem Sicherheitsriegel (28) den Sicherheitsriegel (28) zwangsweise öffnet und eine Signaleinrichtung in der Fahrerkabine erregt, wobei das Schwenken durch Ausfahren eines weiteren Kolbens (4) bewirkt wird, welcher zwischen dem Fahrgestell (1) und einem schwenkbaren Hilfsrahmen (2) angeschlossen ist, der Hilfsrahmen (2) schwenkbar mit dem Fahrgestell (1) an einem Punkt entfernt von dessen hinterem Ende und mit dem L-förmigen Rahmen (16) verbunden ist, dann Fortfahren mit der Hebebewegung, so daß der Sicherheitsriegel (28) automatisch durch die Kraft einer Feder darin geschlossen wird und der L-förmige Rahmen (16) fortfährt zu schwenken, um die Plattform (8) in eine Transportlage auf dem Fahrzeug zu bewegen, ohne irgendwelche Gleitbewegungen zwischen Teilen des L-förmigen Rahmens.

2. Verfahren nach Anspruch 1, wobei der Fortsatz (17) des L-förmigen Rahmens schwenkbar mit diesem über ein dazwischenliegendes Teil (18) verbunden ist, wobei entsprechende Kolben (26, 27) vorgesehen sind, welche zwischen dem zweiten Abschnitt (22) und dem dazwischenliegenden Teil (18) sowie zwischen dem dazwischenliegenden Teil (18) und dem Fortsatz (17) angeschlossen sind, wobei das Verfahren einschließt das Einziehen der Kolben (26, 27) während des Hebevorganges, damit die Plattform (8) nicht übermäßig geneigt wird.

### Revendications

1. Procédé pour charger une plate-forme interchangeable (8) posée sur le sol sur un véhicule, par l'arrière de ce dernier, par la manoeuvre d'un mécanisme de levage porté par le véhicule, le mécanisme de levage comprenant un crochet (15) et un cadre pivotant (16) en forme de L, le cadre (16) possédant un prolongateur (17) articulé sur ce cadre, qui est sensiblement vertical dans la position d'enlèvement du cadre (16), le prolongateur (17) étant muni du crochet (15), le mécanisme comprenant en outre un dispositif à piston et cylindre (appelé vérin pour abréger dans le présent mémoire) articulé pour faire pivoter le cadre en L (16) par rapport au châssis (1) du véhicule; le procédé consistant à placer le crochet (15) sensiblement au niveau du sol, à faire reculer le véhicule vers la plate-forme de manière que le crochet (15) soit placé dans un arceau défini par l'élément de prise (9) de la plate-forme, et à amener le crochet à se placer, dans la position de transport de la plate-forme, adjacent à la jonction des branches du cadre en forme de L (16), caractérisé en ce que (a) on prévoit un verrou de sécurité (28) associé au crochet (15) et (b) on relève le crochet (15) par rapport à la plate-forme (8) en faisant pivoter le cadre en L (16) de manière que le crochet soit centré dans l'arceau et que la coopération entre l'élément de prise et le verrou de sécurité (28) force le verrou (28) à s'ouvrir et excite des moyens de signalisation placés dans la cabine du conducteur, ledit pivotement étant effectué par la mise en extension d'un vérin additionnel (4) interposé entre le châssis (1) du véhicule et un cadre auxiliaire pivotant (2), le cadre auxiliaire (2) étant articulé sur le châssis (1) du véhicule, en un point éloigné de l'extrémité arrière de ce châssis, ainsi que sur le cadre en forme de L (16), puis on poursuit le mouvement de levage de manière que le verrou de sécurité (28) soit automatiquement fermé par la force d'un ressort contenu dans ce verrou et que le cadre en forme de L (16) continue à pivoter pour amener la plate-forme (8) à une position de transport sur le véhicule sans aucun mouvement de glissement entre les parties du cadre en forme de L.

2. Procédé selon la revendication 1, dans lequel le prolongateur (17) est articulé sur le cadre en forme de L avec interposition d'une partie intermédiaire (18), cependant que des vérins (26, 27) sont montés respectivement entre la deuxième partie (22) et la partie intermédiaire (18) ainsi qu'entre la partie intermédiaire (18) et le prolongement (17), le procédé consistant à contracter les vérins (26, 27) pendant l'opération de levage afin que la plate-forme (8) ne soit pas excessive-ment inclinée.

0 107 326

# Fig.1.

# Fig.2.

1

0 107 326

# Fig.3.

# Fig.4.

2

Fig.5.

Fig.9.

Fig.10.

Fig.6.

0 107 326

Fig.7.

# Fig.8.

# Fig.11.

# Fig.12.

0 107 326